# EUROPEAN PATENT APPLICATION

(11) **EP 4 815 393 A1**
(43) Date of publication of application: **30.09.2026**
(21) Application number: 26162828.3
(22) Date of filing: 06.03.2026
(51) Int. Cl.: H04L 43/00

(54) **DEEP LEARNING BASED TETHERING DETECTION**

(30) Priority: 28.03.2025 US 202519094774
(71) Applicant: Microsoft Technology Licensing, LLC, Redmond, WA 98052 (US)
(72) Inventor: BANSAL, Gaurav, Redmond, 98052-6399 (US); MAPPATE, Arun, Redmond, 98052-6399 (US); DUNGAVATH, Nagaraju Naik, Redmond, 98052-6399 (US); SHAH, Pratik Prakash, Redmond, 98052-6399 (US)
(74) Representative: CMS Cameron McKenna Nabarro Olswang LLP

(57) **Abstract**

Packets are captured that are associated with a communications flow in a communications network. An image generated by converting bits of the captured packets to pixel data. The image is input to a machine learning model that is trained to identify an operating system or operating system version based on image data. Identities of operating systems or operating system versions of source devices of the packets are received. Based on the identities, it is determined whether the packets are associated with at least two different operating systems or operating system versions. This indicates the use of device tethering in the communications flow.

## Description

### BACKGROUND

With the advent of increasingly advanced network technologies (e.g., 5G networks, 6G networks), there is an increasing demand for enhanced user experiences in the form of increased bandwidth, reduced end-to-end delays, and the like. Additionally, another goal for mobile operators is increased visibility into network traffic. This can be achieved by means of inline analysis of network traffic using deep packet inspection (DPI) techniques, which help the operator identify not only the applications/protocols in the network traffic but also user behavior.

It is with respect to these and other considerations that the disclosure made herein is presented.

### SUMMARY

An important aspect of the user behavior in mobile networks is effective analysis to determine if the users are using tethering. Tethering generally refers to connecting a device (laptop, tablet, etc.) to the Internet using the data connection of another device, for example a smartphone. While users can connect multiple devices using a single data plan, if such tethered connections are not allowed by a mobile network operator, require a subscription, or is otherwise restricted, such tethering can result in revenue loss for the mobile network operator.

The present disclosure provides a way to detect tethering by identifying the operating system of a device using Secure Sockets Layer (SSL) and Quick UDP Internet Connection (QUIC) flows. In an embodiment, deep learning techniques are used to detect tethering, which overcomes current drawbacks and helps identify tethering with improved accuracy.

In an embodiment, SSL and QUIC flows are used for identifying the operating system of end user devices using deep learning techniques. This in turn enables the detection of tethering, based on the assumption that the operating systems observed from a single subscriber can provide an indication of the use of tethering. For example, the detection of two different operating systems, or two different versions of the same operating system, can indicate the presence of tethering. As SSL and QUIC constitute the majority of Internet traffic today, identifying tethering using these flows allows for tethering to be detected in the majority of cases, since it is likely that a subscriber will be using at least some applications based on either SSL or QUIC.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 is a diagram illustrating an example of tethering detection using IP identification.
FIG. 2 illustrates an example showing an IP-header hex dump, in accordance with the disclosed embodiments.
FIG. 3 illustrates an example partial flow image corresponding to the hex dump in FIG. 2, in accordance with the disclosed embodiments.
FIG. 4 illustrates an example of a hex dump with IP and TCP headers in accordance with the disclosed embodiments.
FIG. 5 illustrates an example partial image for a flow, corresponding to the hex dump in FIG. 4, in accordance with the disclosed embodiments.
FIG. 6 illustrates an example flow image using IP and TCP headers and the payload in accordance with the disclosed embodiments.
FIG. 7A illustrates an example system in accordance with embodiments of the present disclosure.
FIG. 7B illustrates an example system in accordance with embodiments of the present disclosure.
FIG. 8 is a flow diagram showing aspects of an example routine components in accordance with embodiments of the present disclosure.
FIG. 9 is a computer architecture diagram illustrating an illustrative computer hardware and software architecture implementing aspects of the techniques and technologies presented herein.
FIG. 10 is a computer architecture diagram illustrating a computer hardware and software architecture implementing aspects of the techniques and technologies presented herein.
FIG. 11 is a computer architecture diagram illustrating a computer hardware and software architecture implementing aspects of the techniques and technologies presented herein.

### DETAILED DESCRIPTION

Telecom/mobile operators have used several techniques for tethering detection to prevent revenue loss. These techniques involve, for example, analyzing the IP header (e.g., TTL, Identification fields, etc.), the TCP header (e.g., timestamp, window size, etc.) or the payload (e.g., using domain name analysis). Some of these techniques have become obsolete because of the changes observed in the values of various headers over time, and some of these techniques suffer from tethering evasion techniques employed by users. Currently none of these techniques is sufficient to prevent revenue loss in full measure.

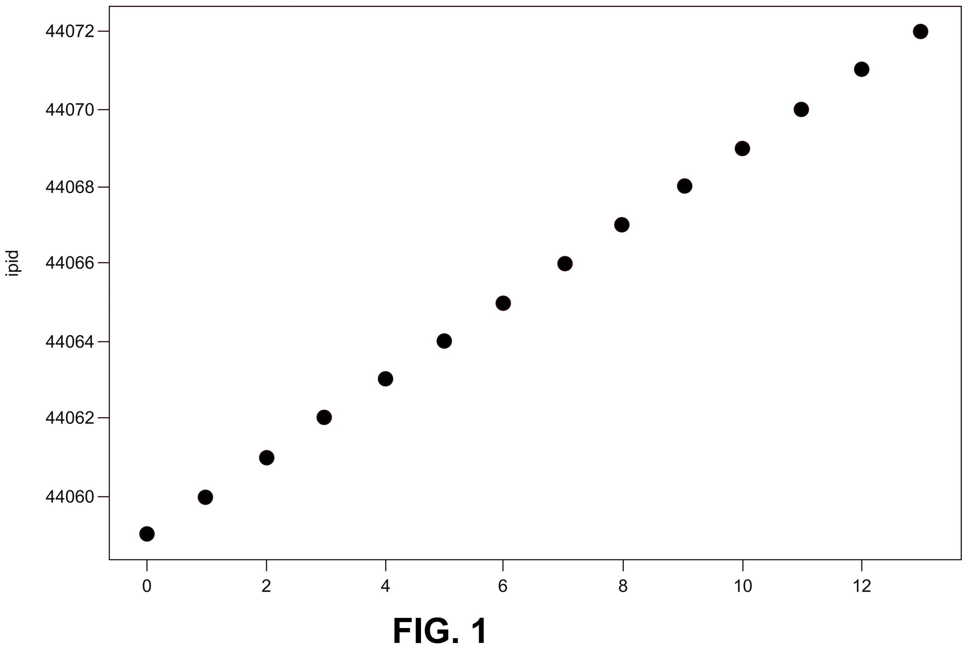

As an example of the shortcomings of traditional approaches to solve the tethering detection problem, one such approach uses the IP identification (IP-id) field. Illustrated in FIG. 1 is a scatter plot of the IP-id of the packets in the uplink direction for a single flow. The IP-id sequentially increases for a flow. Some operating systems exhibit this pattern with sequential IP-id's while other operating systems generate random sequences. Thus, by examining the IP-id sequences coming for different flows from the same subscriber, it is possible to identify that the user is tethering. Similarly, tethering detection can be performed using other techniques, each of which can work for particular scenarios, but are not sufficient to cover most or all scenarios. For example, one technique may be useful for a particular operating system but not useful for others. Similarly, some techniques, for example based on time-to-live (TTL) can work in general but fail when tethering evasion applications are used such as PdaNet.

The present disclosure addresses the described shortcomings using a deep learning based approach. In an embodiment, flow images are generated based on the packet information for packets that are received for a data flow for which a user device is an endpoint. In various embodiments, various data in the packets are extracted and the captured data are transformed into a readily observable format. In one embodiment, greyscale images are generated for each flow for only the uplink packets for various operating systems (e.g., Android, IOS, etc.).

A single flow may be very large, possibly consisting of a million or more packets. To enable efficient inline analysis of tethering, the disclosed techniques for tethering detection can be obtained from only the initial few packets. For example, TCP options are present in the TCP-SYN packet, and SSL headers for various messages such as CLIENT-HELLO and CLIENT-KEY-EXCHANGE are present within the first ten packets of the SSL flow. Rather than generating images for the full flow, images for partial flows are generated in some implementations. Additionally, the partial flow images are generated in the uplink direction only, using headers and payload. This enables the efficient capture of the features or signatures that can be used to detect tethering using less data and thus conserving computation resources.

In one embodiment, features of standard protocol headers are used. For example, for SSL, information is used from various IP fields for TCP and SSL headers. In an example using the protocol headers for SSL, SSL header fields such as cipher suites and compression methods can indicate the list of corresponding parameters supported by a particular device's operating system. This in turn can be used to identify the operating system.

By identifying the operating system of a device as described, detection of tethering is enabled based on the assumption that the operating systems observed from a single subscriber can provide an indication of the use of tethering. For example, the detection of two different operating systems, or two different versions of the same operating system, can indicate the presence of tethering because this indicates the presence of at least two devices (a single device is unlikely to be running more than one operating system). The AI model is trained to detect whether the flow data is associated with a single operating system / version or more than one operating system / version. As SSL and QUIC constitute the majority of Internet traffic today, identifying tethering using these flows allows for tethering to be detected in the majority of cases, since it is likely that a subscriber will be using at least some applications based on either SSL or QUIC.

If all the devices tethered to a parent or connected device have the same operating system but different versions, then the disclosed techniques can be extended to identify the different versions of the same operating system. In one embodiment, a variation of the disclosed techniques can include:
1) Run a first application (e.g., FACEBOOK) on the parent device and a second application (e.g., TWITTER) on the tethered device.
2) Capture the traffic for this subscriber which will contain traffic for both applications.
3) Generate the partial flow images (as described herein) for only those flows which can be identified as the first application or the second application using any of the flow parameters.
4) Label the images as belonging to either the parent or tethered device (based on if they are generated for the first application or second application flows).
5) Use the labeled images for training using a CNN based architecture to identify the tethering. Using partial flow images ensures that only the first few packets of, for example, SSL flows are used for tethering detection without relying on the application data.

As used herein, a "communication flow" generally refers to a sequence of packets from a source (e.g., an application or a virtual machine executing on a host) to a destination having the same 5-tuple, which can be another application or virtual machine executing on another host, a multicast group, or a broadcast domain.

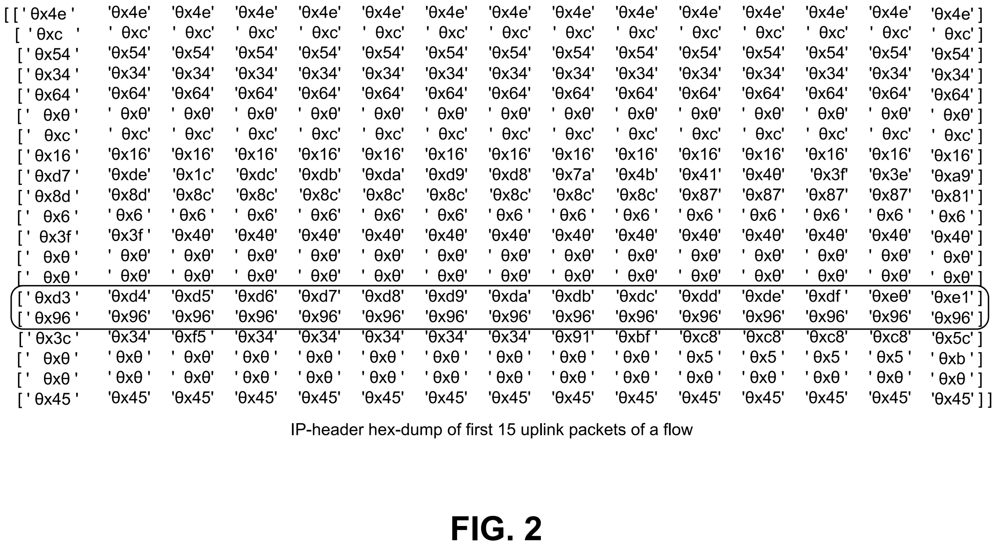

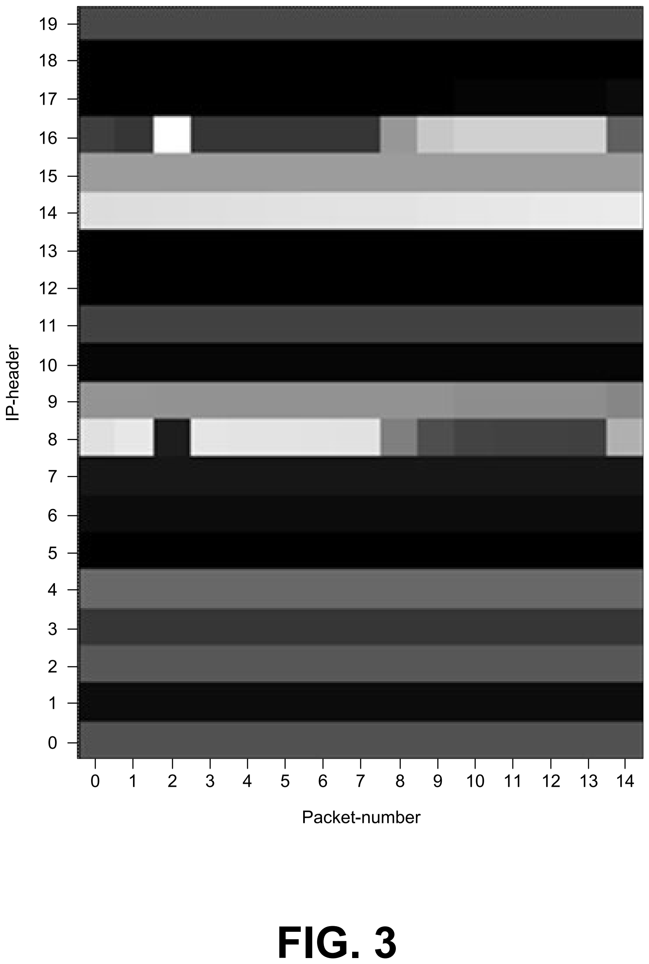

FIGs. 2 and 3 illustrate an example of the disclosed techniques using partial flow images by analyzing only IP headers. Shown in FIG. 2 is the IP-header hex-dump. FIG. 3 illustrates the corresponding partial flow image for the first 15 uplink packets of the flow. As highlighted in the hex-dump, the IP-id sequentially increases which can be used to identify the tethering. When the corresponding image is generated, a distinct data signature is captured in the image. When capturing all IP header fields, it is possible to capture all features which can be used to detect the use of multiple operating systems, which in turn can be used to detect tethering.

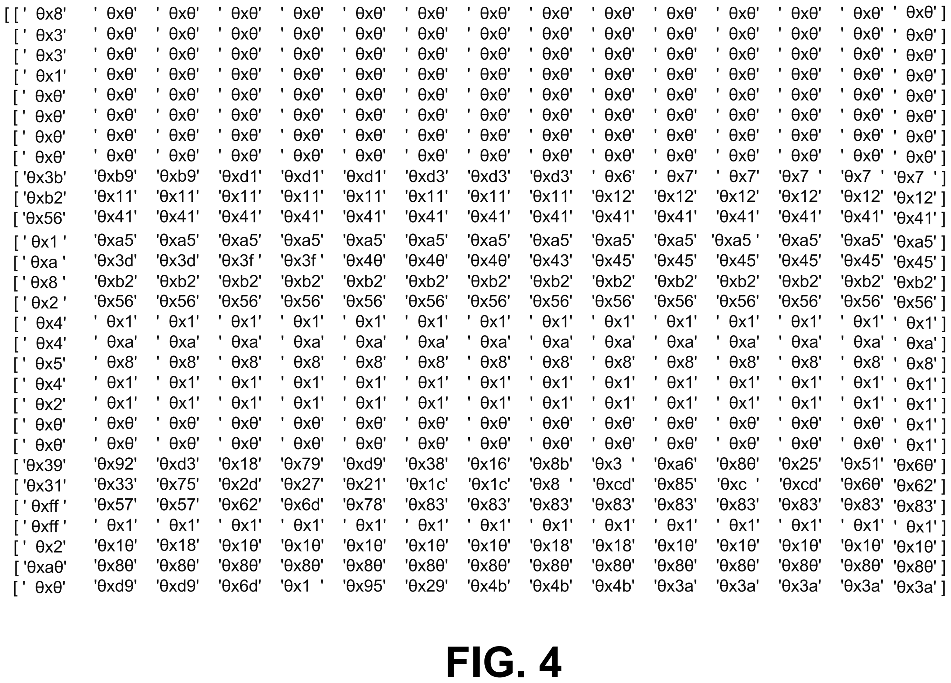

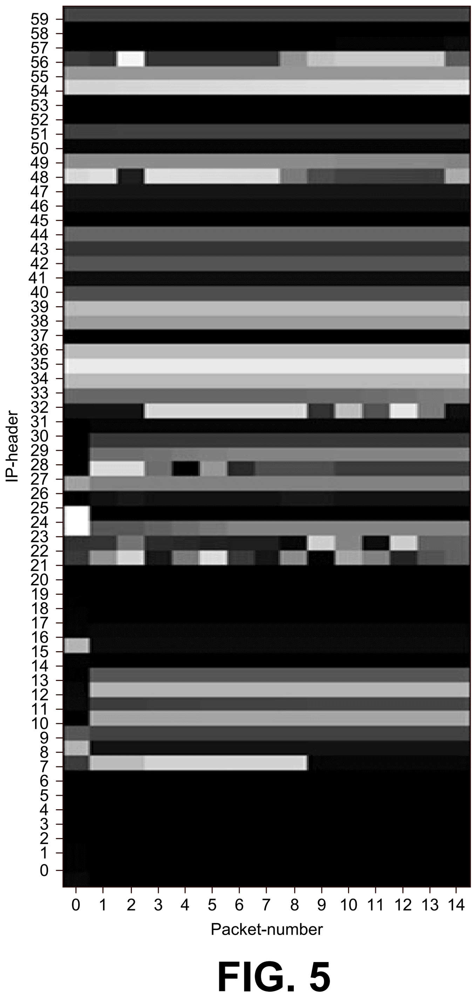

FIGs. 4 and 5 illustrate an example of the disclosed techniques using IP and TCP headers. FIG. 4 illustrates a portion of the hex-dump and FIG. 5 illustrates the corresponding partial image for a single flow with only 15 uplink packets. The images allow for the capture of both the IP and TCP features, for example window size and timestamps, which can be used to identify the operating systems of the user devices and hence detect the use of tethering.

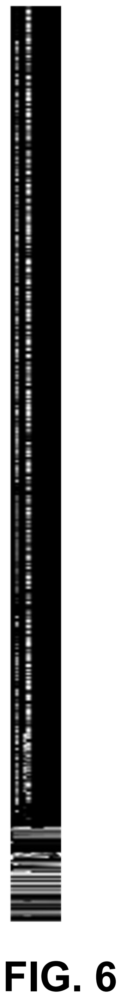

FIG. 6 illustrates an example of the disclosed techniques using IP and TCP headers and the payload. Similar to above approaches, all of the available information including headers and payload are used to identify the user device operating systems thus to detect tethering. Including the use of payload data can yield improved results. FIG. 6 illustrates an example where sample partial images (20x500 pixels) are generated for a single flow with 20 uplink packets and the payload truncated to a maximum of 500 bytes.

In one embodiment, a neural network is trained with various image data generated from PCAP data as described above. The neural network can be trained with data from at least two operating systems such as Android and iOS. In one implementation, a Convolutional Neural Network (CNN) is trained and used to perform tethering detection. CNNs are typically used for image processing, computer vision, and pattern recognition, which makes them suitable for tethering detection using the generated images as described herein. In various embodiments, other models that are adapted to process image data may be used.

While many of the illustrated examples are shown using grey scale images, it should be noted that other imaging schemes can be utilized without limiting the scope of the disclosure.

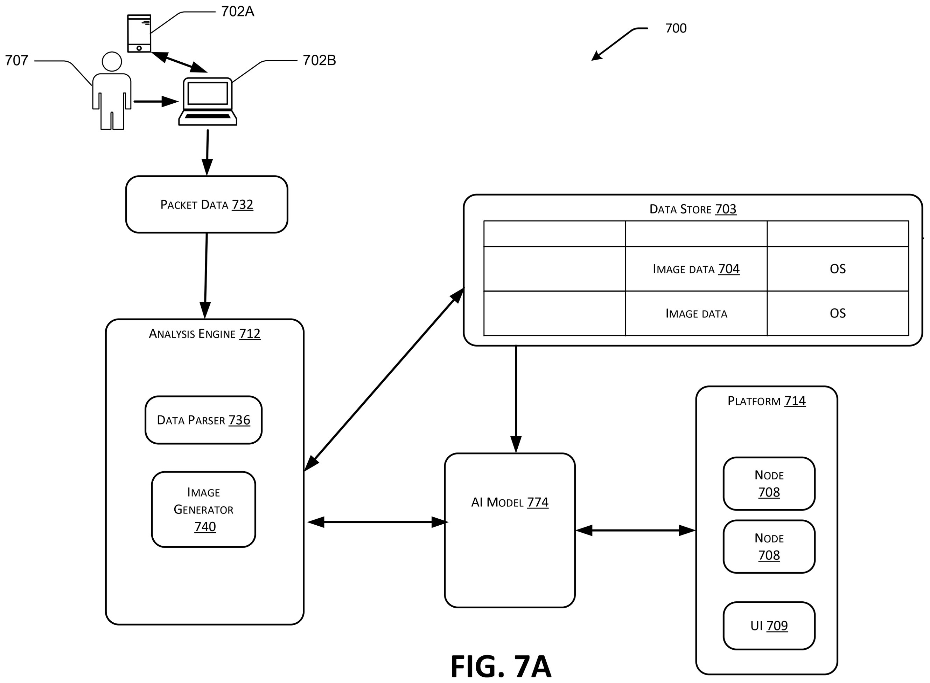

With reference to FIG. 7A, a tethering detection platform 700 is configured to receive packet data 732 originating from devices 702A, 702B from user 707. The devices 702A, 702B may be tethered. The tethering detection platform 700 is configured to execute an analysis engine 712 that can include a data parser 736 for extracting data from the headers and/or payloads of packet data 732. The analysis engine 712 can also include image generator 740 that is configured to transform the data extracted from data parser 736 into image data.

A data store 703 includes data that can include image data 704 that can be used for analysis and/or training the AI model 774. The data store 703 can include one or more tables or other data structures. An AI model 774 can be used to generate a response including a determination as to whether the packet data 732 is indicative of tethering. The determination can be output to a platform 714 with nodes 708 and UI 709. For example, the data store 703 can be leveraged to train the AI model 774 to be deployed for inferencing.

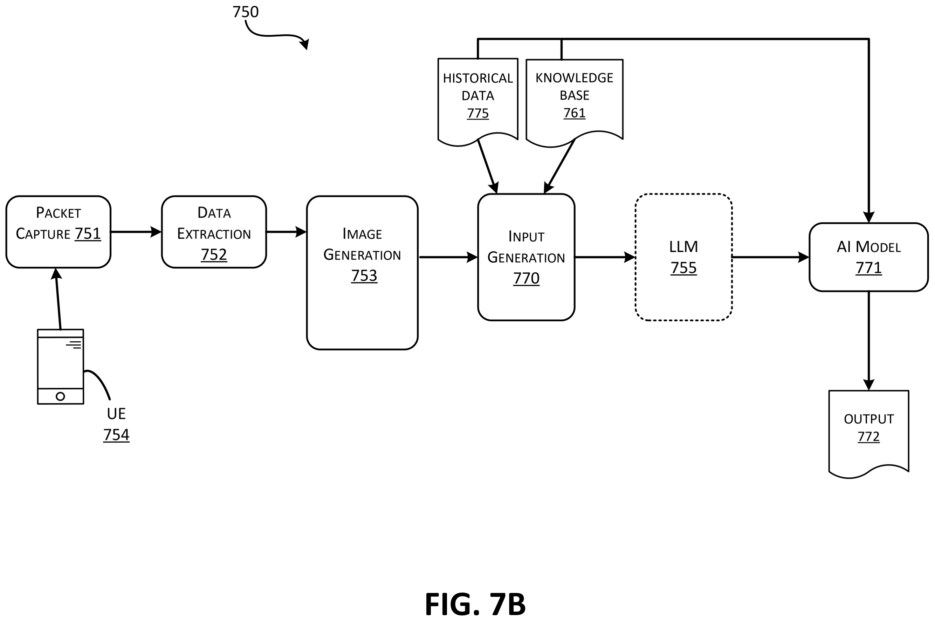

FIG. 7B illustrates an example system 750 illustrating the disclosed embodiments. Packet capture 751 can capture packets from a UE 754 for various data flows. Data can be extracted 752 and image generation 753 can be performed as disclosed herein. In some embodiments, an LLM model can optionally be used to input data to an AI model which acts as a tool for the LLM and is trained on images as described herein. Once the images are generated, an input can be generated 770 for an AI model 771 to detect tethering by the UE 754 and provide an output 772. Optionally, the input can be a prompt to an LLM 755. The input can be generated using historical data 775 and a knowledge base 761. The historical data 775 and a knowledge base 761 can also be used to train the AI model 771.

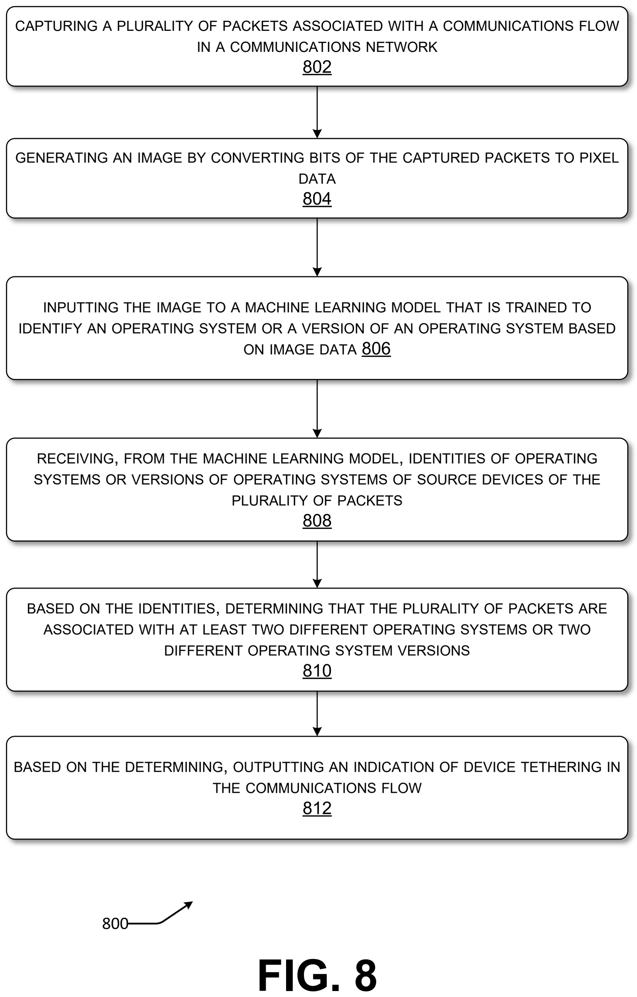

Turning now to FIG. 8, aspects of a process 800 for detecting the presence of device tethering. With respect to FIG. 8, the process 800 includes operation 802 illustrating capturing a plurality of packets associated with a communications flow in a communications network, the communications flow associated with a subscription allowing for use of the communications network by a user.

Operation 804 illustrates based on the captured packets, generating an image by converting bits of the captured packets to pixel data.

Operation 806 illustrates inputting the image to a machine learning model that is trained to identify an operating system or a version of an operating system based on image data.

Operation 808 illustrates receiving, from the machine learning model, identities of operating systems or versions of operating systems of source devices of the plurality of packets.

Operation 810 illustrates based on the identities, determining that the plurality of packets are associated with at least two different operating systems or two different operating system versions.

Operation 812 illustrates based on the determining that the plurality of packets are associated with at least two different operating systems or two different operating system versions, outputting an indication of device tethering in the communications flow.

For ease of understanding, the process discussed in this disclosure is delineated as separate operations represented as independent blocks. However, these separately delineated operations should not be construed as necessarily order dependent in their performance. The order in which the process is described is not intended to be construed as a limitation, and any number of the described process blocks may be combined in any order to implement the process or an alternate process. Moreover, it is also possible that one or more of the provided operations is modified or omitted.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated methods can end at any time and need not be performed in their entireties. Some or all operations of the methods, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the process 800 can be implemented, at least in part, by modules running the features disclosed herein which can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the process 800 may also be implemented in other ways. In addition, one or more of the operations of the process 800 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

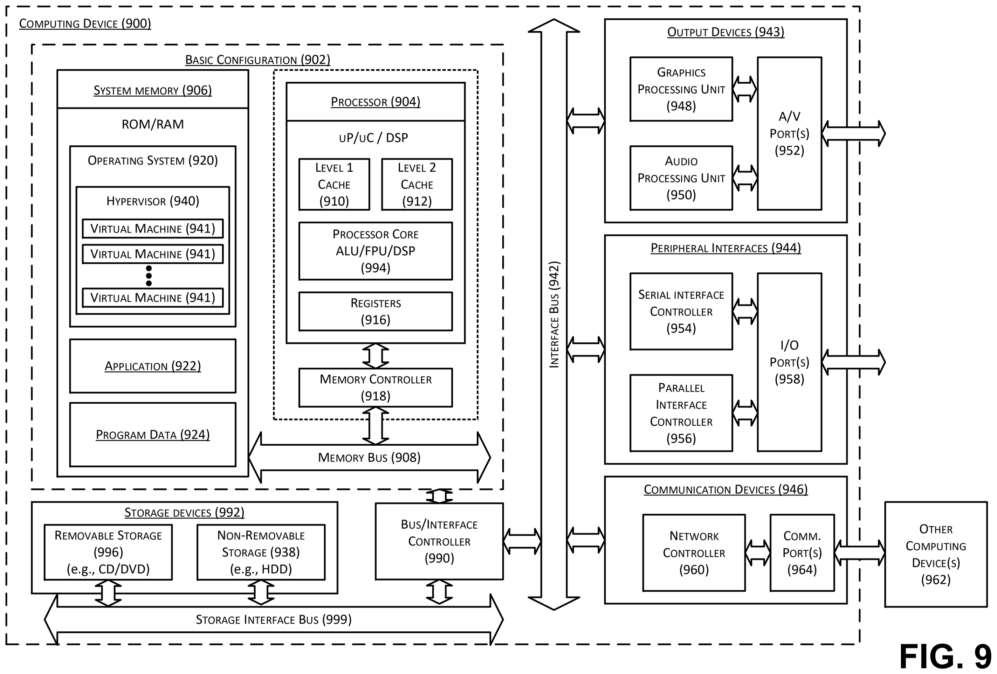

Figure 9 is a computing device 900 suitable for certain components of a computing system device or system. In a very basic configuration 902, the computing device 900 can include one or more processors 904 and a system memory 906. A memory bus 908 can be used for communicating between processor 904 and system memory 906. Depending on the desired configuration, the processor 904 can be of any type including but not limited to a microprocessor (µP), a microcontroller (µC), a digital signal processor (DSP), or any combination thereof. The processor 904 can include one more levels of caching, such as a level-one cache 910 and a level-two cache 912, a processor core 994, and registers 916. An example processor core 994 can include an arithmetic logic unit (ALU), a floating point unit (FPU), a digital signal processing core (DSP Core), or any combination thereof. An example memory controller 918 can also be used with processor 904, or in some implementations memory controller 918 can be an internal part of processor 904.

Depending on the desired configuration, the system memory 906 can be of any type including but not limited to volatile memory (such as RAM), non-volatile memory (such as ROM, flash memory, etc.) or any combination thereof. The system memory 906 can include an operating system 920, one or more applications 922, and program data 924. As shown in Figure 8, the operating system 920 can include a hypervisor 940 for managing one or more virtual machines 941. This described basic configuration 902 is illustrated in Figure 8 by those components within the inner dashed line.

The computing device 900 can have additional features or functionality, and additional interfaces to facilitate communications between basic configuration 902 and any other devices and interfaces. For example, a bus/interface controller 990 can be used to facilitate communications between the basic configuration 902 and one or more data storage devices 992 via a storage interface bus 999. The data storage devices 992 can be removable storage devices 996, non-removable storage devices 938, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media can include volatile and nonvolatile, removable and non-removable media implemented in any method or technology for storage of information, such as computer readable instructions, data structures, program modules, or other data. The term "computer readable storage media" or "computer readable storage device" excludes propagated signals and communication media.

The system memory 906, removable storage devices 996, and non-removable storage devices 938 are examples of computer readable storage media. Computer readable storage media include, but not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information and which can be accessed by computing device 900. Any such computer readable storage media can be a part of computing device 900. The term "computer readable storage medium" excludes propagated signals and communication media.

The computing device 900 can also include an interface bus 942 for facilitating communication from various interface devices (e.g., output devices 943, peripheral interfaces 944, and communication devices 946) to the basic configuration 902 via bus/interface controller 990. Example output devices 943 include a graphics processing unit 948 and an audio processing unit 950, which can be configured to communicate to various external devices such as a display or speakers via one or more A/V ports 952. Example peripheral interfaces 944 include a serial interface controller 954 or a parallel interface controller 956, which can be configured to communicate with external devices such as input devices (e.g., keyboard, mouse, pen, voice input device, touch input device, etc.) or other peripheral devices (e.g., printer, scanner, etc.) via one or more I/O ports 958. An example communication device 946 includes a network controller 960, which can be arranged to facilitate communications with one or more other computing devices 962 over a network communication link via one or more communication ports 964.

The network communication link can be one example of a communication media. Communication media can typically be embodied by computer readable instructions, data structures, program modules, or other data in a modulated data signal, such as a carrier wave or other transport mechanism, and can include any information delivery media. A "modulated data signal" can be a signal that has one or more of its characteristics set or changed in such a manner as to encode information in the signal. By way of example, and not limitation, communication media can include wired media such as a wired network or direct-wired connection, and wireless media such as acoustic, radio frequency (RF), microwave, infrared (IR) and other wireless media. The term computer readable media as used herein can include both storage media and communication media.

The computing device 900 can be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. The computing device 900 can also be implemented as a personal computer including both laptop computer and non-laptop computer configurations.

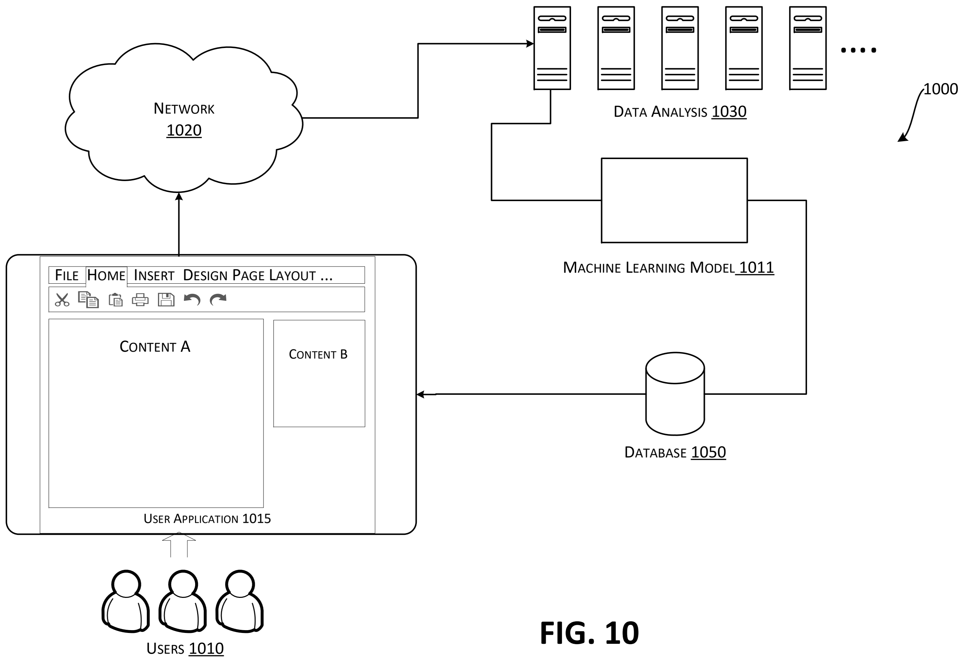

FIG. 10 is a computing system architecture diagram showing an overview of a system disclosed herein for implementing a machine learning model, according to one embodiment disclosed herein. As shown in FIG. 10, a machine learning system 1000 may be configured to perform analysis and perform identification, prediction, or other functions based upon various data collected by and processed by data analysis components 1030 (which might be referred to individually as an "data analysis component 1030" or collectively as the "data analysis components 1030"). The data analysis components 1030 may, for example, include, but are not limited to, physical computing devices such as server computers or other types of hosts, associated hardware components (e.g., memory and mass storage devices), and networking components (e.g., routers, switches, and cables). The data analysis components 1030 can also include software, such as operating systems, applications, and containers, network services, virtual components, such as virtual disks, virtual networks, and virtual machines. Database 1050 can include data, such as a database, or a database shard (i.e., a partition of a database). Feedback may be used to further update various parameters that are used by machine learning model 1020. Data may be provided to the user application 1015 to provide results to various users 1010 using a user application 1015. In some configurations, machine learning model 1011 may be configured to utilize supervised and/or unsupervised machine learning technologies. A model compression framework based on sparsity-inducing regularization optimization as disclosed herein can reduce the amount of data that needs to be processed in such systems and applications. Effective model compression when processing iterations over large amounts of data may provide improved latencies for a number of applications that use such technologies, such as image and sound recognition, recommendation systems, and image analysis.

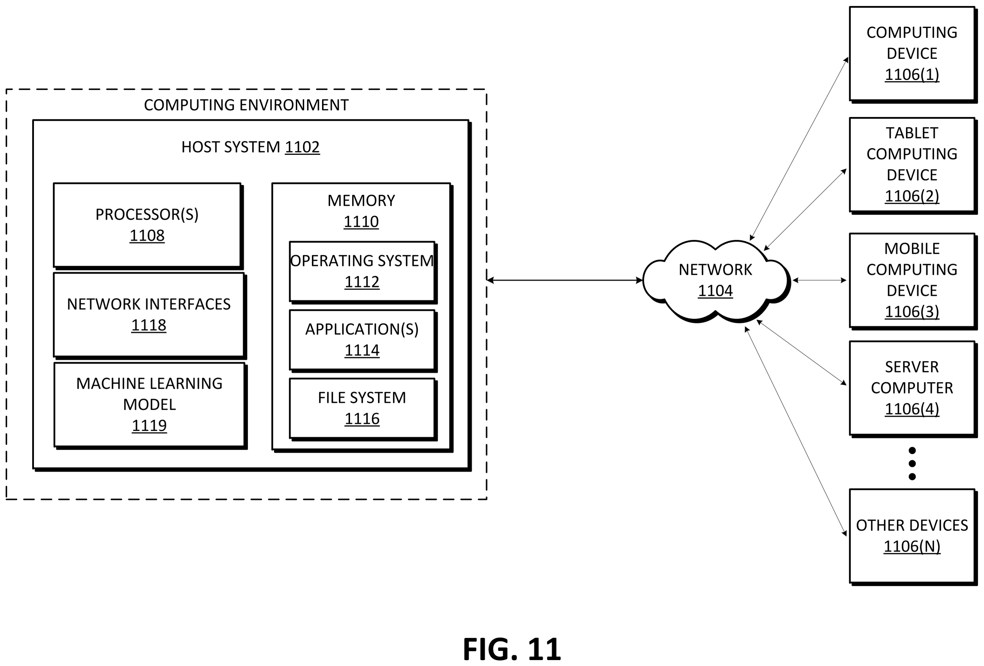

FIG. 11 illustrates an example computing environment capable of executing the techniques and processes described above with respect to FIGS. 1-8. In various examples, the computing environment comprises a host system 1102. In various examples, the host system 1102 operates on, in communication with, or as part of a network 1104.

The network 1104 can be or can include various access networks. For example, one or more client devices 1106(1)...1106(N) can communicate with the host system 1102 via the network 1104 and/or other connections. The host system 1102 and/or client devices can include, but are not limited to, any one of a variety of devices, including portable devices or stationary devices such as a server computer, a smart phone, a mobile phone, a personal digital assistant (PDA), an electronic book device, a laptop computer, a desktop computer, a tablet computer, a portable computer, a gaming console, a personal media player device, or any other electronic device.

According to various implementations, the functionality of the host system 1102 can be provided by one or more servers that are executing as part of, or in communication with, the network 1104. A server can host various services, virtual machines, portals, and/or other resources. For example, a can host or provide access to one or more portals, Web sites, and/or other information.

The host system 1102 can include processor(s) 1108 memory 1110. The memory 1110 can comprise an operating system 1112, application(s) 1114, and/or a file system 1116.

The processor(s) 1108 can be a single processing unit or a number of units, each of which could include multiple different processing units. The processor(s) can include a microprocessor, a microcomputer, a microcontroller, a digital signal processor, a central processing unit (CPU), a graphics processing unit (GPU), a security processor etc. Alternatively, or in addition, some or all of the techniques described herein can be performed, at least in part, by one or more hardware logic components. For example, and without limitation, illustrative types of hardware logic components that can be used include a Field-Programmable Gate Array (FPGA), an Application-Specific Integrated Circuit (ASIC), an Application-Specific Standard Products (ASSP), a state machine, a Complex Programmable Logic Device (CPLD), other logic circuitry, a system on chip (SoC), and/or any other devices that perform operations based on instructions. Among other capabilities, the processor(s) may be configured to fetch and execute computer-readable instructions stored in the memory 1110.

The memory 1110 can include one or a combination of computer-readable media. As used herein, "computer-readable media" includes computer storage media and communication media.

Computer storage media includes volatile and non-volatile, removable and non-removable media implemented in any method or technology for storage of information, such as computer-readable instructions, data structures, program modules, or other data. Computer storage media includes, but is not limited to, phase change memory (PCM), static random-access memory (SRAM), dynamic random-access memory (DRAM), other types of random-access memory (RAM), read-only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium that can be used to store information for access by a computing device.

In contrast, communication media includes computer-readable instructions, data structures, program modules, or other data in a modulated data signal, such as a carrier wave. As defined herein, computer storage media does not include communication media.

The host system 1102 can communicate over the network 1104 via network interfaces 1118. The network interfaces 1118 can include various types of network hardware and software for supporting communications between two or more devices. The host system 1102 may also include machine learning model 1119.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

The disclosure presented herein also encompasses the subject matter set forth in the following clauses.

Clause 1: A method for detecting presence of device tethering, the method comprising:
capturing a plurality of packets associated with a communications flow in a communications network, the communications flow associated with a subscription allowing for use of the communications network by a user;
based on the captured packets, generating an image by converting bits of the captured packets to pixel data;
inputting the image to a machine learning model that is trained to identify an operating system or a version of an operating system based on image data;
receiving, from the machine learning model, identities of operating systems or versions of operating systems of source devices of the plurality of packets;
based on the identities, determining that the plurality of packets are associated with at least two different operating systems or two different operating system versions; and
based on the determining that the plurality of packets are associated with at least two different operating systems or two different operating system versions, outputting an indication of device tethering in the communications flow.

Clause 2: The method of clause 1, wherein the machine learning model is a convolutional neural network (CNN).

Clause 3: The method of any of clauses 1-2, wherein the communications flow is a Secure Sockets Layer (SSL) or Quick UDP Internet Connection (QUIC).

Clause 4: The method of any of clauses 1-3, wherein the at least two different operating systems are Android or IOS.

Clause 5: The method of any of clauses 1-4, wherein the captured packets are an initial set of packets for the communications flow, and wherein the initial set of packets comprise one of TCP options of a TCP-SYN packet or initial packets of an SSL flow.

Clause 6: The method of any of clauses 1-5, wherein the image data is a partial flow image.

Clause 7: The method of clauses 1-6, wherein the partial flow image is generated only in the uplink direction.

Clause 8: A system for detecting presence of device tethering, the system comprising:
a processor; and
a computer-readable storage medium having encoded thereon computer-readable instructions that when executed by the processor, cause the system to perform operations comprising:
   capturing a plurality of packets associated with a communications flow in a communications network, the communications flow associated with a subscription allowing for use of the communications network by a user;
   based on the captured packets, generating an image by converting bits of the captured packets to pixel data;
   inputting the image to a machine learning model that is trained to identify an operating system or an operating system version based on image data;
   receiving, from the machine learning model, identities of operating systems or operating system versions of source devices of the plurality of packets;
   based on the identities, determining that the plurality of packets are associated with at least two different operating systems or operating system versions; and
   based on the determining that the plurality of packets are associated with at least two different operating systems or operating system versions, outputting an indication of device tethering in the communications flow.

Clause 9: The system of clause 8, wherein the communications flow is a Secure Sockets Layer (SSL) or Quick UDP Internet Connection (QUIC).

Clause 10: The system of any of clauses 8 and 9, wherein the at least two different operating systems are Android or IOS.

Clause 11: The system of any of clauses 8-10, wherein the captured packets are an initial set of packets for the communications flow.

Clause 12: The system of any of clauses 8-11, wherein the initial set of packets comprise one of TCP options of a TCP-SYN packet or initial packets of an SSL flow.

Clause 13: The system of any of clauses 8-12, wherein the image data is a partial flow image.

Clause 14: The system of any of clauses 8-13, wherein the partial flow image is generated only in the uplink direction.

Clause 15: A computer-readable storage medium having encoded thereon computer-readable instructions that when executed by a system, cause the system to perform operations comprising:
capturing a plurality of packets associated with a communications flow in a communications network, the communications flow associated with a subscription allowing for use of the communications network by a user;
based on the captured packets, generating an image by converting bits of the captured packets to pixel data;
inputting the image to a machine learning model that is trained to identify an operating system or an operating system version based on image data;
receiving, from the machine learning model, identities of operating systems or operating system versions of source devices of the plurality of packets;
based on the identities, determining that the plurality of packets are associated with at least two different operating systems or operating system versions; and
based on the determining that the plurality of packets are associated with at least two different operating systems or operating system versions, outputting an indication of device tethering in the communications flow.

Clause 16: The computer-readable storage medium of clause 15, wherein the communications flow is a Secure Sockets Layer (SSL) or Quick UDP Internet Connection (QUIC).

Clause 17: The computer-readable storage medium of any of clauses 15 and 16, wherein the captured packets are an initial set of packets for the communications flow.

Clause 18: The computer-readable storage medium of any of clauses 15-17, wherein the initial set of packets comprise one of TCP options of a TCP-SYN packet or initial packets of an SSL flow.

Clause 19: The computer-readable storage medium of any of clauses 15-18, wherein the image data is a partial flow image.

Clause 20: The computer-readable storage medium of any of the clauses 15-19, wherein the partial flow image is generated only in the uplink direction.

Packets are captured that are associated with a communications flow in a communications network. An image generated by converting bits of the captured packets to pixel data. The image is input to a machine learning model that is trained to identify an operating system or operating system version based on image data. Identities of operating systems or operating system versions of source devices of the packets are received. Based on the identities, it is determined whether the packets are associated with at least two different operating systems or operating system versions. This indicates the use of device tethering in the communications flow.

## Claims

1. A method for detecting presence of device tethering, the method comprising:
capturing a plurality of packets (732) associated with a communications flow in a communications network, the communications flow associated with a subscription allowing for use of the communications network by a user;
based on the captured packets, generating an image (740) by converting bits of the captured packets to pixel data;
inputting the image to a machine learning model (774) that is trained to identify an operating system or a version of an operating system based on image data;
receiving, from the machine learning model, identities (808) of operating systems or versions of operating systems of source devices of the plurality of packets;
based on the identities, determining (810) that the plurality of packets are associated with at least two different operating systems or two different operating system versions; and
based on the determining that the plurality of packets are associated with at least two different operating systems or two different operating system versions, outputting (772) an indication of device tethering in the communications flow.

2. The method of claim 1, wherein the machine learning model is a convolutional neural network, CNN.

3. The method of claim 1 or 2, wherein the communications flow is a Secure Sockets Layer, SSL, or Quick UDP Internet Connection, QUIC.

4. The method of any preceding claim, wherein the at least two different operating systems are Android or IOS.

5. The method of any preceding claim, wherein the captured packets are an initial set of packets for the communications flow, and wherein the initial set of packets comprise one of TCP options of a TCP-SYN packet or initial packets of an SSL flow.

6. The method of any preceding claim, wherein the image data is a partial flow image.

7. The method of claim 6, wherein the partial flow image is generated only in the uplink direction.

8. A system for detecting presence of device tethering, the system comprising:
a processor; and
a computer-readable storage medium having encoded thereon computer-readable instructions that when executed by the processor, cause the system to perform operations comprising:
capturing a plurality of packets (732) associated with a communications flow in a communications network, the communications flow associated with a subscription allowing for use of the communications network by a user;
based on the captured packets, generating an image (740) by converting bits of the captured packets to pixel data;
inputting the image to a machine learning model (774) that is trained to identify an operating system or an operating system version based on image data;
receiving, from the machine learning model, identities (808) of operating systems or operating system versions of source devices of the plurality of packets;
based on the identities, determining (810) that the plurality of packets are associated with at least two different operating systems or operating system versions; and
based on the determining that the plurality of packets are associated with at least two different operating systems or operating system versions, outputting (772) an indication of device tethering in the communications flow.

9. The system of claim 8, wherein the communications flow is a Secure Sockets Layer, SSL, or Quick UDP Internet Connection, QUIC.

10. The system of claim 8 or 9, wherein the at least two different operating systems are Android or IOS.

11. The system of any of claims 8 to 10, wherein the captured packets are an initial set of packets for the communications flow.

12. The system of claim 11, wherein the initial set of packets comprise one of TCP options of a TCP-SYN packet or initial packets of an SSL flow.

13. The system of any of claims 8 to 12, wherein the image data is a partial flow image.

14. The system of claim 13, wherein the partial flow image is generated only in the uplink direction.

15. A computer-readable storage medium having encoded thereon computer-readable instructions that when executed by a system, cause the system to perform operations comprising:
capturing a plurality of packets (732) associated with a communications flow in a communications network, the communications flow associated with a subscription allowing for use of the communications network by a user;
based on the captured packets, generating an image (740) by converting bits of the captured packets to pixel data;
inputting the image to a machine learning model (774) that is trained to identify an operating system or an operating system version based on image data;
receiving, from the machine learning model, identities (808) of operating systems or operating system versions of source devices of the plurality of packets;
based on the identities, determining (810) that the plurality of packets are associated with at least two different operating systems or operating system versions; and
based on the determining that the plurality of packets are associated with at least two different operating systems or operating system versions, outputting (772) an indication of device tethering in the communications flow.
